# EUROPEAN PATENT SPECIFICATION

(11) **EP 3 169 829 B1**
(45) Date of publication and mention of the grant of the patent: **23.05.2018**
(21) Application number: 15738374.6
(22) Date of filing: 17.07.2015
(51) Int. Cl.: C25B 11/00, C25B 11/02, C25B 1/26

(54) **ELECTROCATALYTIC GENERATION OF CHLORINE DIOXIDE**
ELEKTROKATALYTISCHE ERZEUGUNG VON CHLORDIOXID
PRODUCTION ÉLECTROCATALYTIQUE DE DIOXYDE DE CHLORE

(30) Priority: 17.07.2014 US 201462025557 P
(43) Date of publication of application: 24.05.2017
(73) Proprietor: Industrie De Nora S.P.A., 20134 Milano (IT)
(72) Inventor: HARDEE, Kenneth, L., Middlefield, Ohio 44062 (US)
(74) Representative: Reitstötter Kinzebach
(86) International application number: PCT/EP2015/066378
(87) International publication number: WO 2016/009031

(56) References cited:
- CA-A1- 2 157 827
- US-A- 3 873 437
- US-A- 4 388 162
- US-B1- 6 203 688

## Description

### FIELD OF THE INVENTION

The invention relates to the production of chlorine dioxide (ClO₂) and particularly to a suitable electrode element and a catalytic process for the production of chlorine dioxide.

### BACKGROUND OF THE INVENTION

Historically, ClO₂ has been commercially prepared by a reaction between a metal chlorate in aqueous solution, such as sodium chlorate (NaClO₃) , and a relatively strong acid such as sulphuric, phosphoric or hydrochloric acid.

Generally, processes for generating ClO₂ make use of an alkali chlorate-containing feedstock, usually NaClO₃, that also includes a halide salt of alkali metal or other reducing agents. The sodium chlorate feedstock for such a ClO₂ production process is typically generated by electrolysis of sodium chloride brine in any well-known manner. When chlorides are used as the reducing agent, the mixture of brine and chlorate is directly fed to one or more reactors where the feedstock contacts a desired acid and reacts to form ClO₂. Due to the high amount of acidity required, e.g. 5-10N acid, coupled with the need for a reducing agent, small scale production of ClO₂ from NaClO₃ is not practised. Examples of ClO₂ generation processes via electrochemical or catalytic reduction of sodium chlorate in strong acid are reported for example in US4501824, US426263, US4381290 and US4362707. These prior art teachings allow to dispense with the need for a separate reducing agent, still requiring however a chemical supply of acid in the process.

US 6,203,688 B1 describes a process and a device for generating chlorine dioxide starting from a chlorite solution comprising an acidification step in an acidification cell and a chlorine dioxide evolution step in a subsequent cell. US 3,873,437 A and US 4,388,162 A describe segmented electrodes provided with a single type of catalyst component with the same function in all segments.

### SUMMARY OF THE INVENTION

Various aspects of the invention are set out in the accompanying claims.

Under one aspect, the invention relates to an electrode element as defined in claim 1 comprising a valve metal substrate; a first catalyst component applied to said substrate, said first catalyst component suitable for evolving oxygen from an aqueous solution under anodic polarisation; a second catalyst component suitable for generating chlorine dioxide from a chlorate solution in acidic environment; said first and second catalyst component being electrically insulated from each other.

By virtue of the above arrangement, the anodic evolution of oxygen with the consequent generation of protons brings about a lowering of the local pH of the solution at the surface of the second catalyst component. In other words, the electrochemical anodic reaction produces the acid concentration suitable for carrying out the catalytic reduction of chlorate to chlorine dioxide without the need of any external addition of acid. The electrode element of the invention is then suitable for generating chlorine dioxide starting from water and a chlorate solution only, thus avoiding the handling of strong mineral acids such as sulphuric acid.

With electrode element it is herewith intended an integral electrode comprising two distinct catalyst components arranged in a single stand-alone piece, the two catalyst components being either spaced apart by means of a suitable insulating spacer, or in intimate contact but electrically insulated from each other.

In one embodiment, the second catalyst component of the electrode element is supported on a ceramic support. The ceramic support, for example, can be in the form a discrete ceramic media such as distillation saddles.

In another embodiment, the second catalyst component of the electrode element is supported on a metallic support.

This second catalyst component can be optionally polarized to a lower potential to enhance the production of chlorine dioxide.

In one embodiment, the second catalyst component of the electrode element is connected to a power supply.

In one embodiment, the first catalyst component of the electrode element comprises noble metal oxides.

In one embodiment, in the electrode element according to the invention the second catalyst component is a mixture of noble metal oxides selected from the group consisting of ruthenium oxide, iridium oxide, palladium oxide, rhodium oxide and platinum oxide. Optionally, the second catalyst component also comprises a valve metal oxide.

In one embodiment, the second catalyst component of the electrode element is in the form of a ceramic or metallic sheet or mesh or of a porous material.

Under another aspect, the invention relates to an electrolytic cell comprising at least one electrode element as described above.

In one embodiment, the electrolytic cell is equipped with electrode elements disposed as an array of intercalated first catalyst components applied to substrates and second catalyst components, the first and second catalyst components being reciprocally insulated.

Under yet another aspect, the invention relates to a process for the generation of chlorine dioxide on a catalyst component comprising the steps of:
- providing an electrochemical cell comprising at least one cathode and at least one electrode element as described in claim 1 as the anode;
- supplying said cell with an aqueous feedstock containing a chlorate solution;
- electrolyzing said feedstock by passing an electric current between the cathode and the anode thereby forming oxygen and acidity on the surface of said first catalyst component and supplying acidity to the surroundings of the surface of said second catalyst layer;
   - stripping and recovering chlorine dioxide generated on the catalytic layer.

Preferably, the solution is electrolyzed at a temperature of 40°C to 90°C.

The following examples are included to demonstrate particular embodiments of the invention, whose practicability has been largely verified in the claimed range of values. It should be appreciated by those of skill in the art that the compositions and techniques disclosed in the examples which follow represent compositions and techniques discovered by the inventors to function well in the practice of the invention; however, those of skill in the art should, in light of the present disclosure, appreciate that many changes can be made in the specific embodiments which are disclosed and still obtain a like or similar result without departing from the scope of the invention.

### EXAMPLE

An electrochemical cell comprising a 0.5 cm-diameter coated titanium rod as the anode was prepared. The coating of the anode consisted of 10 g/m² of mixed oxides of iridium and tantalum in a 2:1 molar ratio. A coated titanium expanded mesh serving as support for the second catalyst element was wrapped around the rod with a spacer arranged therebetween to provide for electrical insulation. The coating of the titanium mesh consisted of 10 g/m² of RuO₂/RhO₂ in a 1:2 molar ratio. A 2M NaClO₃ solution was supplied as the electrolyte feedstock. The reaction was carried out at a temperature of 61°C and at an anode current density of 50 mA/cm².

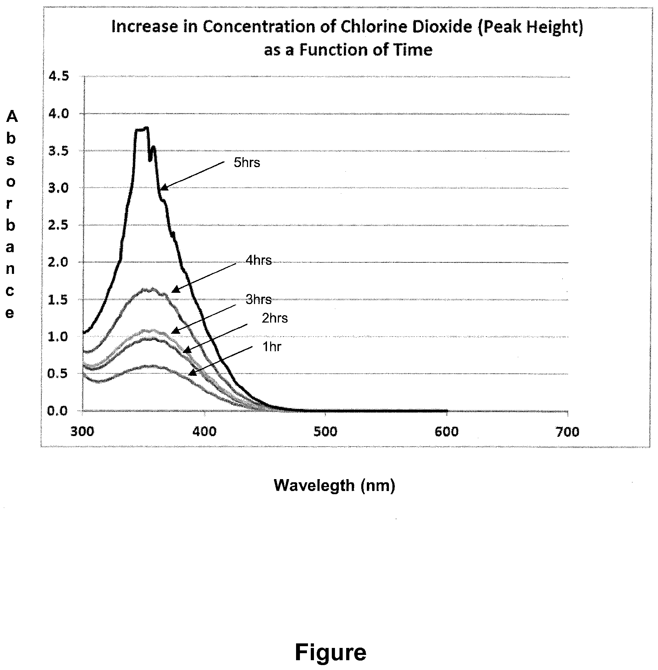

The test was run for 5 hours. A sample was taken every one hour and characterised in a UV/VIS Spectrophotometer (Hach DR 5000). The figure shows the increase in chlorine dioxide concentration as a function of time.

The previous description shall not be intended as limiting the invention, which may be used according to different embodiments without departing from the scopes thereof, and whose extent is solely defined by the appended claims.

Throughout the description and claims of the present application, the term "comprise" and variations thereof such as "comprising" and "comprises" are not intended to exclude the presence of other elements, components or additional process steps.

The discussion of documents, acts, materials, devices, articles and the like is included in this specification solely for the purpose of providing a context for the present invention. It is not suggested or represented that any or all of these matters formed part of the prior art base or were common general knowledge in the field relevant to the present invention before the priority date of each claim of this application.

## Claims

1. Electrode element consisting of an integral electrode comprising two distinct catalyst components arranged in a single stand-alone piece comprising:
- a valve metal substrate;
- a first catalyst component applied to said substrate, said first catalyst component suitable for evolving oxygen from an aqueous solution under anodic polarisation;
- a second catalyst component suitable for generating chlorine dioxide from a chlorate solution in acidic environment;
said first and second catalyst component being electrically insulated from each other.

2. Electrode element according to claim 1, wherein said second catalyst component is supported on a ceramic support.

3. Electrode element according to claim 1, wherein said second catalyst component is supported on a metallic support.

4. Electrode element according to claim 1, wherein said first catalyst component comprises noble metal oxides.

5. Electrode element according to claim 1, wherein said second catalyst component is a mixture of noble metal oxides selected from the group consisting of ruthenium oxide, iridium oxide, palladium oxide, rhodium oxide and platinum oxide, optionally comprising a valve metal oxide.

6. Electrode element according to claim 1, wherein said second catalyst component is in the form of a sheet, a mesh or a porous material.

7. Electrolytic cell comprising at least one electrode element as described in claim 1.

8. Electrolytic cell according to claim 7, wherein the electrode elements are disposed by array of intercalated first catalyst components applied to substrates and second catalyst components insulated from each other.

9. Electrolytic cell comprising at least one electrode element as described in claim 3 and a power supply, wherein said second catalyst component is connected to said power supply.

10. Process for the generation of chlorine dioxide on a catalyst component comprising the steps of:
- providing an electrochemical cell comprising at least one cathode and at least one electrode element as described in claim 1 as anode;
- filling said cell with an aqueous feedstock containing a chlorate solution;
- electrolyzing said feedstock by passing an electric current between the cathode and the anode thereby forming oxygen and acidity on the surface of said first catalyst component and thereby acidity in close contact with the surface of said second catalyst layer;
- stripping and recovering the chlorine dioxide generated on said second catalytic layer.

## Patentansprüche

1. Elektrodenelement, bestehend aus einer integralen Elektrode, die zwei verschiedene Katalysatorkomponenten umfasst, die in einem einzelnen eigenständigen Stück angeordnet sind, umfassend:
- ein Ventilmetallsubstrat;
- eine erste auf das Substrat aufgebrachte Katalysatorkomponente, wobei die erste Katalysatorkomponente für die Entwicklung von Sauerstoff aus einer wässrigen Lösung unter anodischer Polarisation geeignet ist;
- eine zweite Katalysatorkomponente, die zur Erzeugung von Chlordioxid aus einer Chloratlösung in saurer Umgebung geeignet ist;
wobei die erste und zweite Katalysatorkomponente elektrisch voneinander isoliert sind.

2. Elektrodenelement nach Anspruch 1, wobei die zweite Katalysatorkomponente auf einem keramischen Träger geträgert ist.

3. Elektrodenelement nach Anspruch 1, wobei die zweite Katalysatorkomponente auf einem metallischen Träger geträgert ist.

4. Elektrodenelement nach Anspruch 1, wobei die erste Katalysatorkomponente Edelmetalloxide umfasst.

5. Elektrodenelement nach Anspruch 1, wobei die zweite Katalysatorkomponente eine Mischung von Edelmetalloxiden ist, ausgewählt aus der Gruppe bestehend aus Rutheniumoxid, Iridiumoxid, Palladiumoxid, Rhodiumoxid und Platinoxid, gegebenenfalls umfassend ein Ventilmetalloxid.

6. Elektrodenelement nach Anspruch 1, wobei die zweite Katalysatorkomponente die Form einer Folie, eines Gitters oder eines porösen Materials aufweist.

7. Elektrolysezelle, umfassend zumindest ein Elektrodenelement nach Anspruch 1.

8. Elektrolysezelle nach Anspruch 7, wobei die Elektrodenelemente vorliegen als Anordnung von interkalierten ersten, auf Substrate aufgebrachten Katalysatorkomponenten und zweiten Katalysatorkomponenten, die voneinander isoliert sind.

9. Elektrolysezelle mit zumindest einem Elektrodenelement nach Anspruch 3 und einer Stromversorgung, wobei die zweite Katalysatorkomponente mit der Stromversorgung verbunden ist.

10. Verfahren zur Erzeugung von Chlordioxid an einer Katalysatorkomponente, umfassend die Schritte von:
- Bereitstellen einer elektrochemischen Zelle, umfassend zumindest eine Kathode und zumindest ein Elektrodenelement, wie in Anspruch 1 beschrieben, als Anode;
- Füllen der Zelle mit einem wässrigen Ausgangsmaterial, das eine Chloratlösung enthält;
- Elektrolysieren des Ausgangsmaterials durch Leiten eines elektrischen Stroms zwischen der Kathode und der Anode, wodurch Sauerstoff und Säure an der Oberfläche der ersten Katalysatorkomponente gebildet werden und wodurch Säure in engem Kontakt mit der Oberfläche der zweiten Katalysatorschicht gebildet wird;
- Abstreifen und Rückgewinnung des an der zweiten katalytischen Schicht erzeugten Chlordioxids.

## Revendications

1. Elément d'électrode consistant en une électrode intégrale comprenant deux composants catalyseurs distincts disposés selon une pièce autonome unique, comprenant :
- un substrat métallique de soupape ;
- un premier composant catalyseur appliqué sur ledit substrat, ledit premier composant catalyseur permettant le dégagement d'oxygène à partir d'une solution aqueuse sous polarisation anodique ;
- un deuxième composant catalyseur permettant de générer du dioxyde de chlore à partir d'une solution de chlorate dans un environnement acide ;
ledit premier et ledit deuxième composants catalyseurs étant électriquement isolés l'un de l'autre.

2. Elément d'électrode selon la revendication 1, dans lequel ledit deuxième composant composition est supporté par un support céramique.

3. Elément d'électrode selon la revendication 1, dans lequel ledit deuxième composant catalyseur est supporté par un support métallique.

4. Elément d'électrode selon la revendication 1, dans lequel ledit premier composant catalyseur comprend des oxydes de métaux nobles.

5. Elément d'électrode selon la revendication 1, dans lequel ledit deuxième composant catalyseur est un mélange d'oxydes de métaux nobles choisis dans le groupe consistant en l'oxyde de ruthénium, l'oxyde d'iridium, l'oxyde de palladium, l'oxyde de rhodium et l'oxyde de platine, comprenant en option un oxyde métallique de soupape.

6. Elément d'électrode selon la revendication 1, dans lequel ledit deuxième composant catalyseur se présente sous forme d'une feuille, d'un filet ou d'un matériau poreux.

7. Cellule électrolytique comprenant au moins un élément d'électrode tel que décrit dans la revendication 1.

8. Cellule électrolytique selon la revendication 7, dans laquelle les éléments d'électrode sont disposés sous forme d'une matrice de premiers composants catalyseurs intercalés appliqués sur des substrats et de deuxièmes composants catalyseurs, isolés les uns des autres.

9. Cellule électrolytique comprenant au moins un élément d'électrode tel que décrit dans la revendication 3 et une alimentation, ledit deuxième composant catalyseur étant connecté à ladite alimentation.

10. Procédé de production de dioxyde de chlore sur un composant catalyseur, comprenant les étapes de :
- fourniture d'une cellule électrochimique comprenant au moins une cathode et, en tant qu'anode, au moins un élément d'électrode tel que décrit dans la revendication 1 ;
- remplissage de ladite cellule avec une charge aqueuse contenant une solution de chlorate ;
- électrolyse de ladite charge par passage d'un courant électrique entre la cathode et l'anode, en formant de ce fait de l'oxygène et une acidité sur la surface dudit premier composant catalyseur, l'acidité étant alors en contact étroit avec la surface de ladite deuxième couche de catalyseur ;
- épuisement et récupération du dioxyde de chlore produit sur ladite deuxième couche catalytique.
